# EUROPEAN PATENT APPLICATION

(11) **EP 1 686 834 A1**
(43) Date of publication of application: **02.08.2006**
(21) Application number: 06001317.4
(22) Date of filing: 23.01.2006
(51) Int. Cl.: H04R 9/06, H04M 1/03

(54) **Miniature multi-loudspeaker module**

(30) Priority: 28.01.2005 US 648366 P
(71) Applicant: Sonion Horsens A/S, 8700 Horsens (DK)
(72) Inventor: Andersen, Morten Kjeldsen, 8300 Odder (DK); Johannsen, Leif, 8300 Odder (DK)
(74) Representative: Inspicos A/S

(57) **Abstract**

The present invention provides a miniature multi-loudspeaker module with a housing, comprising a magnetic circuit comprising magnetic means and a magnetically conducting body arranged to define a magnetic field, first and second diaphragm and coil assemblies that are separately movable, and wherein the first and second diaphragms extend in substantially the same plane. The module further comprises a front cover attached to the housing, the front cover comprising first and second sound outlet openings each being in acoustical connection with at least respective ones of the first and second diaphragms. In preferred embodiments at least parts of the magnetic circuit can be shared by the first and second diaphragm and coil assemblies, however separate magnetic circuits may be preferred that are fixed together by insert molding. Preferred embodiments have two diaphragm and coil assemblies that can be separately electrically terminated so as to enable stereo sound reproduction and can be operated out of phase to serve as a vibration source. Such loudspeaker modules may be utilized for providing stereo sound in, e.g. mo-bile phones. The front cover may in addition comprise a receiver sound outlet opening. Thus, the loudspeaker module may further serve as a receiver in a mobile phone. The receiver signal can either be generated by the two diaphragms or by a separately movable third diaphragm and coil assembly.

## Description

### FIELD OF THE INVENTION

The present invention relates to the field of miniature loudspeaker modules. In particular, the invention relates to miniature multi-loudspeaker modules suitable for integration in mobile terminals such as mobile phones and other portable communication and audio devices. The miniature multi-loudspeaker in accordance with the invention provides at least two independently operating loudspeakers that may be adapted for stereo sound reproduction.

### BACKGROUND OF THE INVENTION

Mobile terminals, such as mobile telephones, PDAs, handheld game devices or port-able audio devices and the like, are often equipped with an audio sound reproduction system capable of providing stereo sound in at least a part of the audible frequency range. Typically, the sound reproduction system comprises at least two separate loud-speakers positioned in peripheral parts of the mobile terminal or device in order to re-produce a stereo sound image. Thus, the manufacturing process of including such at least two loudspeakers in the mobile device requires a complicated mounting procedure with respect to both mechanical mounting and electrical connections to the sepal-rate loudspeakers.

European patent application EP 1 073 312 describes a loudspeaker module with two circular driving coils positioned next to each other within one housing. The two driving coils have separate electrical terminations. However, both driving coils are attached to one common diaphragm. The loudspeaker module of EP 1 073 312 is adapted to generate a high acoustical output due to its two driving coils and its quite large diaphragm. However, with only one movable diaphragm, the loudspeaker module is un-able to reproduce stereo audio signals in spite of its two separate driving coils.

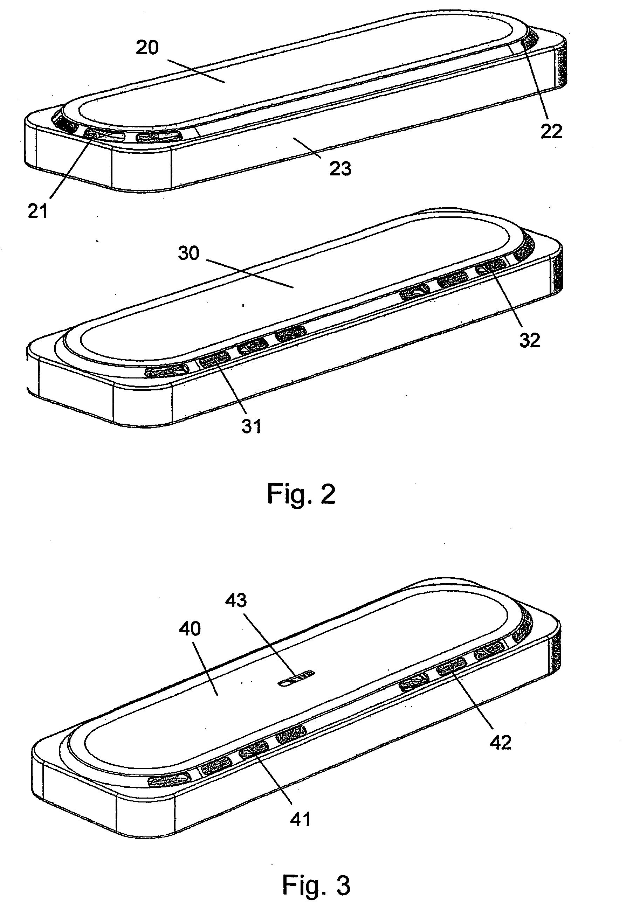

European patent application EP 1 257 147 shows examples of loudspeaker modules with separate diaphragm and coil assemblies that can be suited as stereo loudspeaker modules in mobile phones. For example, FIGS. 3A and 3B show an embodiment with two circular diaphragms 71, 72 that extend in different planes, i.e. in a stack configuration. These diaphragms are acoustically connected to respective ones of sound outlet openings 78 and 81 via ducts 76 and 79 so as to allow the two sound outlets 78, 81 to be positioned on each side of the display of the mobile phone, such as shown in FIGS. 13A and 13B. Since the diaphragms 71, 72 are positioned in a stack configuration the loudspeaker module is inherently not adapted for applications that only has very limited amount of height available for the loudspeaker module.

US 4,764,961 and JP 62071399 both disclose arrangements having a plurality of diaphragms suspended in essentially the same plane. However, the arrangements suggested in US 4,764,961 and JP 62071399 both emit sound in a direction being substantially perpendicular to the plane defined by the plurality of diaphragms.

### SUMMARY OF THE INVENTION

It may be seen as an object of the present invention to provide a loudspeaker module capable of providing stereo sound and still compact enough to fit miniature applications with a very limited height available for the loudspeaker module. In addition, the loudspeaker module should preferably be suitable for low cost manufacturing.

The above-mentioned object and other objects are fulfilled by providing, in a first aspect, a miniature multi-loudspeaker module comprising a housing that includes a magnetic circuit comprising magnetic means and a magnetically conducting body arranged to generate a magnetic field in one or more magnetic gaps.

The housing further comprises a first diaphragm and coil assembly and a second diaphragm and coil assembly that are separately movable, wherein the first and second coils each comprises one or more gap portions adapted for positioning in the magnetic field, and wherein the first and second diaphragms extend in substantially the same plane.

In a preferred embodiment, the present invention relates to a miniature multi-loudspeaker module comprising
- a housing, comprising
   - a magnetic circuit comprising magnetic means and a magnetically conducting body arranged to generate a magnetic field in one or more magnetic gaps, and
   - a first diaphragm and coil assembly and a second diaphragm and coil assembly that are separately movable, wherein the first and second coils each comprises one or more gap portions positioned in the magnetic field, the first and second diaphragms extending in substantially the same plane,
- first and second sound outlet openings being arranged so as to transmit sound from the module in directions being substantially parallel to a plane defined by the diaphragms, the first and second sound outlet openings each being in acoustical connection with respective ones of the first and second diaphragms

The first and second sound outlet openings may be arranged in a front cover fixedly arranged relative to the housing. The first and second sound outlet openings may be positioned in respective end parts of the front cover.

Due to the at least two diaphragm and coil assemblies with separately movable diaphragms comprised in one housing, a compact loudspeaker module is provided that is capable of providing stereo sound reproduction. With the at least two diaphragms extending in substantially the same plane, the loudspeaker module can be manufactured with a small building height and thus suitable for slim devices such as mobile phones.
By "magnetically conductive body" it is understood to be a body of a magnetically conductive material, i.e. a material preferably of a ferromagnetic composition, such as mumetal.

Preferably, for proper stereo sound reproduction, the at least two diaphragm and coil as-assemblies are identical or at least with more or less identical electroacoustic performance. The multi-loudspeaker module may also serve as a vibration source by operating the first and second diaphragm and coil assemblies out of phase, such as in opposite phase. An electrical signal, such as with a predominant energy content in the frequency range 100-150 Hz, may be provided in opposite phase to the first and second coils so as to provide movement of the first and second diaphragms in opposite directions. Thus, in *e.g.* a mobile phone or in a handheld game device, the multi-loudspeaker module can be used to provide stereo sound as well as to provide a substantially silent alarm signal or tactile feedback in a vibration mode of operation of the multi-loudspeaker module, thus both modes of operation are provided in a single module or unit thereby saving space and facilitating the as-assembly process.

The magnetic circuit may comprise a common magnetic gap shared by gap portions of the first and second coils. An example of such an embodiment is a two-diaphragm version that may be formed by one magnetic circuit with one gap shared by gap portions of the two coils. Other examples are three or more diaphragm versions that share one common magnetic gap. Still other examples are embodiments with first and second common magnetic gaps shared by respective first and second gap portions of each of the first and second coils. An advantage of embodiments with common magnetic gaps is that the number of single components to produce the loudspeaker module can be reduced, and this serves to facilitate the manufacturing process and reduce costs.

Alternatively, the magnetic circuit may comprise a first and a second magnetic gap for respective gap portions of the first and second coils. Examples of such embodiments are two-diaphragm versions comprising two magnetic gaps, each of which has one gap portion of respective ones of two coils positioned therein. The magnetic circuit may comprise first and second magnetic gaps for respective first and second gap portions of the first coil and third and third and fourth magnetic gaps for respective first and second gap portions of the second coil. A preferred two-diaphragm version has a magnetic circuit with four magnetic gaps, two magnetic gaps for gap portions of the first coil and two magnetic gaps for gap portions of the second coil. In one embodiment the first and second magnetic gaps comprise respective first and second substantially circular gaps with respective substantially circular gap portions of the first and second coils positioned therein, e.g. a stereo version comprising two conventional loudspeaker units.

The magnetic circuit may comprise first and second magnetic means adapted to generate magnetic fields in the respective first and second magnetic gaps, i.e. separate first and second magnetic circuits generating respective first and second magnetic fields having respective gap portions of the first and second coils positioned therein. For example, a stereo embodiment may comprise first and second separate magnetic circuits each comprising one or more magnetic gaps for respective gap portions of the first and second coils. Preferred embodiments comprise first and second separate magnetic circuits that comprise respective first and second magnetic circuits gaps, wherein the first and second separate magnetic circuits are separated by a molded synthetic material part, such as a plastic part. Such synthetic material part is advantageous in that it enables a variable length or width of the loudspeaker module by simple means, with use of only one type of magnetic circuit. The molded synthetic material part may form, together with the housing, an acoustical shielding (or separation) between the first and second diaphragms. Such shielding wall or barrier serves to acoustically isolate sound from the first and second diaphragm so as to enhance a stereo effect when used for stereo sound reproduction. The wall can also serve for fixation of the diaphragm(s).

The magnetic circuit may comprise a plurality of separate parts that are fixed together by means of insert molding, such as, for example, a magnet and two or more separate parts of the magnetically conductive body are fixed together by insert molding.

A simple embodiment comprises two separate miniature loudspeaker transducers, with separate magnetic circuits, e.g. with circular magnetic gaps and corresponding circular gap portions of respective first and second coils positioned therein. The two separate miniature loudspeaker transducers may then be positioned next to each other in a common housing, optionally with one common front cover for both miniature loudspeaker transducers. Separate parts of the magnetic circuit, i.e. magnet, magnetically conductive body parts, may comprise fixation means such as protrusions, taps, indentations and/or grooves and the like in order to be precisely positioned in relation to each other and then fixed together by insert molding. This helps to provide a robust and stiff loudspeaker module which again helps to reduce stress in the diaphragm and it prepares the loudspeaker module to withstand shock and drop which is a critical parameter for miniature transducers designed for application within mobile devices.

The diaphragms may have any shape, including shapes that are generally circular, elliptical or rectangular. The housing may in principle have any shape, but a preferred shape is generally rectangular.

Preferred embodiments further comprise a front cover attached to the housing, the front cover comprising first and second sound outlet openings each being in acoustical connection with respective ones of the first and second diaphragms. Alternatively, the front cover may be attached to parts of the magnetic circuit. Preferably, the first and second sound outlet openings are positioned in the front cover so as to transmit sound from the loud-speaker in directions being substantially parallel with a plane defined by the front cover. Such front cover embodiments are especially adapted to fit slim applications, such as a position below the display of a mobile phone with the first and second sound outlet openings positioned so as to be aligned with sound outlet openings positioned in each side of a housing of the mobile phone.

The first and second sound outlet openings are preferably positioned in respective end parts of the front cover. This embodiment is even more preferable in connection with the housing and front cover having a generally elongated structure. Such embodiments provide an adequate spatial separation between the two sound outlet openings and thus provides, in spite of miniature dimensions, a satisfactory stereo sound image for many applications.

The front cover may be formed in one single piece, such as in one sheet of metal pressed into shape and provided with holes for sound outlet openings. If preferred, separate front covers may be provided for each diaphragm and coil assembly, such as two separate front covers, one for each of the first and second diaphragm and coil assembly of a stereo embodiment of the loudspeaker module.

The front cover may further comprise a receiver sound outlet opening, i.e. an opening adapted to be closely coupled to a user's ear in a shielded manner. With a receiver sound outlet opening positioned preferably in a central part of a top portion of the front cover, the loudspeaker module is suitable also for serving as a receiver of e.g. a mobile phone. Thus, the loudspeaker module may be positioned within an upper portion of the mobile phone so that the receiver sound outlet opening is positioned to provide the user with a receiver sound during normal telephone use. The at least two diaphragm and coil assemblies may then serve to provide stereo sound from the sides of the mobile phone in a hands-free mode of operation of the mobile phone.

Such embodiments with an integrated receiver and loudspeaker function in one housing helps to save space within a mobile phone and provides a much simplified assembly process compared to mounting and electrically connecting e.g. two separate loudspeaker transducers and one receiver transducer all in different locations within a mobile phone. The receiver sound outlet opening may be acoustically connected to at least one of the first and second diaphragms. Preferably, the receiver outlet opening is acoustically connected to the diaphragms via an acoustically resistive element. Thus, one or more of the at least two diaphragm and coil assemblies may be used to provide a receiver sound through the receiver sound outlet opening, such as by applying an electrical mono signal to the two coils. The acoustically resistive element may be used to attenuate the acoustic output from the diaphragm and coil assembly/assemblies so as to provide a suitably low acoustic output level from the receiver outlet opening. The acoustically resistive element may comprise a grid, a mesh, porous fabrics, a small hole, a cluster of small holes, a small tube, a cluster of small tubes, or any combination thereof. The necessary attenuation in receiver mode of operation may also be provided by reducing the electrical input(s) to the first and/or second coil(s).

The miniature multi-loudspeaker module may further comprise a third diaphragm and coil assembly, wherein the third coil comprises a gap portion positioned in the magnetic field, wherein the third diaphragm and coil assembly is separately movable from the first and second diaphragm and coil assemblies, and wherein the third diaphragm is acoustically connected to the receiver sound outlet opening. At least one magnetic gap may have gap portions of the first, second and third coils positioned therein. The first, second and third diaphragms may be formed by one single piece of a substantially plane sheet shaped so as to provide three separately movable regions. A method of providing separately movable regions of a single sheet diaphragm will be further explained below.

The loudspeaker module may comprise first and second electrical terminals connected to respective first ends of the first and second coils. Combined with a third electrical terminal connected to second ends of both of the first and second coils, e.g. a common ground terminal, a 3-terminal loudspeaker module with separate electrical access to the first and second coils can be achieved so as to enable stereo sound reproduction. Optionally, separate third and fourth electrical terminals connected to respective second ends of the first and second coils are provided, thus enabling a 4-terminal loudspeaker module. The loudspeaker module may comprise a closed back volume associated with the first and second diaphragm, such as provided by the housing. The closed back volume may be common to the first and second diaphragms. The closed back volume may alternatively comprise first and second separate back volumes associated with the respective first and second diaphragms.

In some embodiments, the first and second diaphragms are formed by one single piece of a substantially plane sheet shaped so as to provide first and second separately movable regions. Preferably, a piece of flexible circuit board, *e.g.* a piece of flex print, may be used to form the first and second separately movable regions. The separately movable regions may be provided in different ways. It may be provided by a fold, such as a fold along a straight line perpendicular to a major axis of extension of the substantially plane sheet. Most preferably such fold is positioned so as to separate the plane sheet in two regions with substantially equal areas. The fold serves to mechanically de-couple the two separately movable regions and thus enable them to generally move separately. The substantially plane sheet may also be shaped, e.g. provided with two or more folds, to provide a non-radiating region of the substantially plane sheet. Preferably this non-radiating region totally separates the first and second separately movable regions. The non-radiating region may be fixed to a fixed part of the loudspeaker module, e.g. to a wall positioned between the two diaphragm and coil assemblies, the wall serving also, together with the housing, to acoustically shield the two diaphragm and coil assemblies. In other embodiments the first and second diaphragms are formed by separate substantially plane sheets. In some embodiments, the loudspeaker module comprises an electrical input terminal adapted to receive a digital electrical signal representing first and second audio signals and means adapted to transform the received digital electrical signal to corresponding first and second analog electrical signals and apply these analog electrical signals to respective ones of the first and second coils.

In such digital embodiments, only very limited external wiring is necessary, and it may be directly connected to a digital line, such as to a signal processor or main processor of the device in which the loudspeaker module is mounted.

In preferred embodiments the means adapted to transform the received digital electrical signal to corresponding first and second analog electrical signals may be integrated in one or more integrated circuits that is/are attached to a surface of one or both of the first and second diaphragms. Preferably these diaphragms comprise electrically conductive paths on their surface, providing electrical connection to the coil(s) and providing electrical termination of the loudspeaker module. The integrated circuit(s) are then electrically connected to these electrically conductive portions, such as by soldering or be means of conductive adhesives.

A second aspect of the invention provides a mobile terminal comprising a miniature multi-loudspeaker module according to any of the preceding claims. The mobile terminal may be selected from the group consisting of: mobile phone, palm computer, MP3 player, mobile game device and mobile radio.

The foregoing and additional aspects of the present invention will be apparent to those of ordinary skill in the art in view of the detailed description of various embodiments, which is made with reference to the drawings, a brief description of which is provided next.

### BRIEF DESCRIPTION OF THE DRAWINGS

In the following, the present invention will be explained in further details with reference to the accompanying figures, where
FIG. 1 shows a preferred embodiment in two pre-assembled stages and in a cut away view,
FIG. 2 shows two different configurations of front covers with different positions of sound outlet opening,
FIG. 3 shows a front cover with a receiver sound outlet opening,
FIG. 4 shows in different views, an embodiment with one magnetic circuit with a single magnetic gap common for two diaphragm and coil assemblies,
FIG. 5 shows an embodiment with three diaphragm and coil assemblies,
FIG. 6 shows coil systems for the embodiments of FIG. 4 and 5, and
FIG. 7 shows sketches of stereo loudspeaker modules positioned within a mobile phone and within a game device.

While the invention is susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the spirit and scope of the invention as defined by the appended claims.

### DETAILED DESCRIPTION OF THE INVENTION

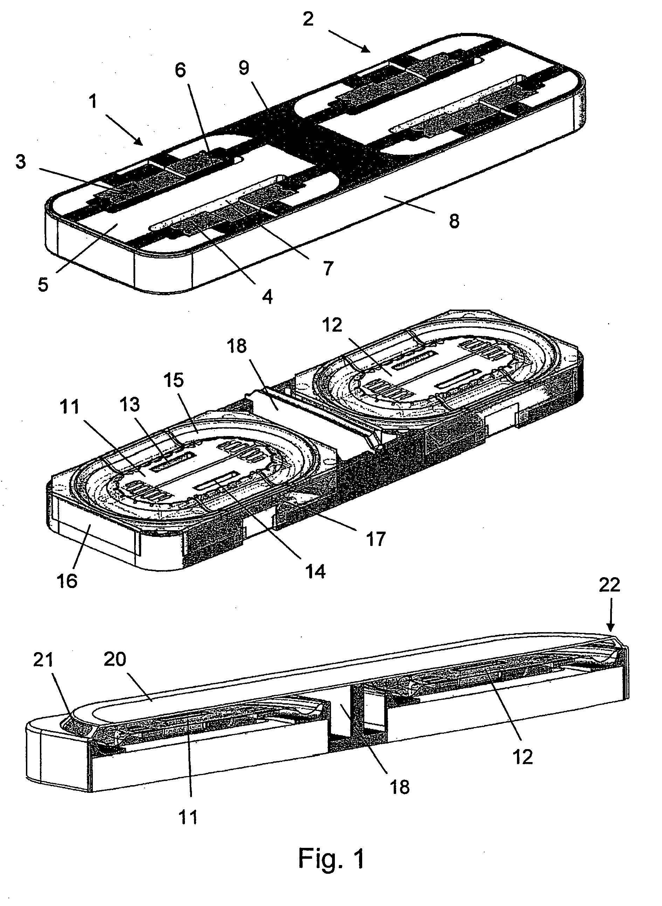

FIG. 1 shows, in three different views, a preferred dual loudspeaker embodiment suitable as a stereo loudspeaker module in a mobile phone. Upper part of FIG. 1 shows the magnetic circuit of the loudspeaker module. The loudspeaker module comprises two separate transducers having separate first and second magnetic circuits 1, 2 that are identical so as to provide equal acoustical performance in the two stereo channels.
Each of the magnetic circuits 1, 2 comprises a first magnet 3 and second magnet 4 arranged in a body of magnetically conductive material 5. The magnetically conductive material 5 comprises two substantially rectangular elongated members and two substantially rectangular short members connected at their ends to form a closed magnetic loop of generally rectangular shape. A substantially rectangular central member interconnects the two short members dividing the internal of the rectangular closed magnetic loop into two rectangular and through-going openings. The two elongated members, the two short members and the central member of the magnetic circuit are of a magnetically conductive material preferably having a high magnetic saturation value. The surfaces of the two elongated members and of the central member facing towards the openings, are generally plane and define a gap therebetween. On the plane side of each of the elongated members facing the opening is a magnet 3 attached to the sides of the elongated members. The magnets 3, 4 each have a magnetic pole surface attached to the elongated member and the opposite free magnetic pole surface facing the opening and the opposed plane surface of the central member, whereby magnetic gaps 6, 7 are defined between the free magnetic pole surfaces and the surfaces of the central member. The magnetic gaps 6, 7 are thus formed as rectangular though-going openings.

A first magnetic closed loop between first and second surfaces of the first gap 6 is defined through the magnet 3, via a first elongated member, via the short members, and via the central member. A second magnetic closed loop between first and second surfaces of the second gap 7 is defined through the magnet 4, via a second elongated member, via the short members, and via the central member. Thus, the closed magnetic loops around the respective first and second gaps extend in planes defined by the magnetically conductive body 5. In the shown embodiment the closed magnetic loops extend in the same plane as the plane defined by the first and second diaphragms 11, 12. The closed magnetic loops extend in a plane that is horizontal in relation to a bottom of the housing 8. In other words, the magnetic flux lines of the magnetic circuits 1, 2 shown in FIG. 1 are substantially horizontal in relation to an extension of the loudspeaker module seen as a whole.

The principles of the magnetic circuit shown in FIG. 1 are advantageous for miniature transducer components since it can be manufactured with a limited height and still provide a high efficiency. The type of magnetic circuit shown in FIG. 1 can function without a bottom piece due to the magnetic return path extending in two-dimensions. Thus, compared to traditional circular loudspeaker magnetic circuit it is inherently slim and thus suited for miniature applications such as mobile phones.

Upper part of FIG. 1 shows the two magnetic circuit parts 1, 2 positioned in a housing 8 and the described parts of the magnetically conductive body 5 and magnets 3, 4 are fixed together by a synthetic material 9 (dark color), preferably by an insert molding process. Each one of the described rectangular shaped part of the magnetically conductive body 5 and the magnets 3, 4 have suitable indents that allows the synthetic material 9 to provide tongues that partly surround the parts, these tongues serving to provide extra fixation of the position of the parts relative to each other. Being molded together, preferably by an insert molding process, the two magnetic circuit parts 1, 2 thus forms a single unit that may be attached to the housing 8, e.g. by adhesives.

From a manufacturing point of view the insert molding technique is advantageous due to the fact that for example the length of the loudspeaker module can easily be varied by merely adjusting the distance between the two parts 1, 2 while still using the same magnetically conductive body 5 and magnet 3, 4 components. Thus, these components 3, 4, 5 can be mass produced while still be used for loudspeaker modules having different outer dimensions. Such different outer dimensions, e.g. different lengths, allow the loudspeaker modules to individually fit to applications with different dimensions, e.g. a specific width of different mobile phone housing. Preferably, the magnetic circuit has a length of 3-4 times its width in case it is intended for a mobile phone.

A stereo module, such as the one shown in FIG. 1, may have length x width x height dimensions of its magnetic circuit such as 50 x 15 x 3 mm in case to be used for a mobile phone, or such as 100 x 30 x 5 mm, in case it is intended for use in a handheld game device. Depending on the desired back volume, a housing may add such as 1-3 mm to the total height of a complete multi-loudspeaker module. It is appreciated that a stereo module can be manufactured with smaller dimension, such as 30 x 10 x 3 mm, or even smaller if only a moderate acoustic output is required.

Middle part of FIG. 1 shows the described first and second parts 1, 2 with first and second identical diaphragm units mounted. Each diaphragm unit is formed by a thin and flexible sheet brought into a desired shape e.g. by means of thermo-shaping. Each diaphragm unit comprises first and second diaphragms 11, 12. Explained now with reference to the first part 1, the diaphragm is substantially plane and equipped with first and second slit shaped openings 13, 14 aligned with the magnetic gaps 6, 7. These openings 13, 14 are each adapted for mounting of driving coils.

The diaphragm 11 is suspended by a suspension part 15 that extends along an entire perimeter of the diaphragm 11. The suspension part 15 forms a transition part between the diaphragm 11 and fastening parts 16, 17 that are used to fasten the diaphragm unit to the magnetic circuit 1. In order to separate acoustical outputs generated by the two diaphragms 11, 12, a separating wall 18 is positioned between the two separate transducers.

The driving coil is preferably formed by a thin and flexible sheet, such as a flexible printed circuit board, i.e. a flex print. Such thin and flexible sheet will carry a predefined electrically conductive path thereon so as to form a coil-like electrical path. Preferably such driving coils comprise a gap portion adapted to be positioned in the magnetic gap, and a fastening portion perpendicular to the gap portion, the fastening portion being adapted for fastening to an upper or lower surface of the diaphragm 11.

Preferably, the fastening portion of the driving coils preferably also comprises electrical connections so as electrically terminate the driving coil. Preferably, the diaphragms 11, 12 have electrically conductive portions disposed on their surfaces. The driving coils are then electrically terminated via these connections to the conductive portions on the diaphragms 11, 12, such as by soldering, welding, thermo-compression bonding or by means of conducting adhesives. Preferably, the conductive portions on the diaphragms 11, 12 are connected via conductive portions on the suspension part 15 to terminating parts that are positioned on a non-moving part of the diaphragm unit. This method of terminating the loudspeaker module eliminates loose wires from the coils that are susceptible to breaking due to vibration of the diaphragm. The driving coils may be made light-weight by using aluminum as conducting material. The conductive portions on the diaphragm 11 and suspension part 15 may be made of copper which is more flexible and thus better suited to withstand the bending motions that conductive portions on the suspension part 15 are exposed to during diaphragm movements.

Bottom part of FIG. 1 shows a cut away view of the dual loudspeaker module with a front cover 20 mounted. The front cover 20 has a flat upper portion and first and second sound outlet openings 21, 22 positioned in each end of the front cover. The front cover 20 forms together with the separating wall 18 an acoustic separation between sound generated by the two diaphragms 11, 12. Thus, the first sound outlet opening 21 predominantly provides acoustic output from the first diaphragm 11, while the second sound outlet opening 22 predominantly provides acoustic output from the second diaphragm 12. The position of the sound outlet openings 21, 22 in the ends of the front cover 20, and thus close to the ends of the loudspeaker module, "end shooting," makes the loudspeaker module well suited for mounting within a mobile phone housing with the sound outlet openings 21, 22 positioned close to the sides of the mobile phone housing. The only acoustic requirements put for the mobile phone housing are openings adapted to be aligned with the sound outlet openings 21, 22 thus allowing stereo sound output from the sides of the mobile phone. If preferred, the sound outlet openings 21, 22 in the front cover 20 may be positioned in the upper portion of the front cover 20 thus allowing the loudspeaker module to fit, e.g. a mobile phone with sound outlet openings positioned in its front, such as narrow slits positioned next to the display.

FIG. 2 shows two fully assembled dual loudspeaker module embodiments. Upper part of FIG. 2 has a front cover 20 similar to the one shown in FIG. 1, i.e. with sound outlet openings 21, 22 positioned towards the ends of the front cover 20 and thus towards the ends of the loudspeaker module. The front cover 20 has an edge portion 23 that is adapted to be fastened to an outer part of the housing 8 along its entire periphery. However, the front cover may also be formed without the edge part 23 and be fastened to an upper edge part of the housing 8, e.g. by adhesives.

Lower part of FIG. 2 shows an assembled dual loudspeaker module with a front cover 30 that has its sound outlet openings 31, 32 positioned along its long side, i.e. such embodiment being adapted for "side shooting." In spite of the slightly different position of the sound outlet openings 31, 32, internal parts of this embodiment may be identical to the embodiment shown in FIG. 1.

FIG. 3 shows a front cover of a stereo loudspeaker and receiver module specially suited for mobile phones. The front cover 40 has sound outlet openings 41, 42 adapted to provide loudspeaker outputs from respective first and second diaphragms. The sound outlet openings 41, 42 are positioned along one side of the front cover 40. In addition, the module comprises a receiver outlet opening 43. This receiver outlet opening 43 is positioned in a central part of a flat upper surface of the front cover 40. Such stereo loudspeaker and receiver module can be positioned in a mobile phone at the position of a normal receiver module. However, the combined loudspeaker and receiver module provides a stereo loudspeaker output in addition to the normal receiver output. Thus, being provided in a single housing with a single front cover a very compact module can be formed and thus, it is suited to provide stereo sound also in mobile phones with very limited space available within its housing.

The receiver output of a stereo loudspeaker and receiver module may be generated in various ways. In one embodiment of such combined module, the receiver outlet opening 43 is acoustically connected to either the first or the second loudspeaker diaphragms that are adapted to generate stereo sound via the stereo sound outlet openings 41, 42. The receiver outlet opening 43 may also be acoustically connected to both the first and second loudspeaker diaphragms. In order to provide an acoustic attenuation, the receiver outlet opening is acoustically connected with the first and/or the second diaphragms via an acoustically resistance element. However, such extra at-attenuation of the acoustic output from the first and second loudspeaker diaphragms may alternatively be provided electronically.

In another embodiment, a receiver signal is provided by a separate third diaphragm arranged between the first and second loudspeaker diaphragms, an acoustic output from the third diaphragm being acoustically separated from the first and second diaphragms. The receiver outlet opening 43 is then acoustically connected to the third diaphragm. Preferably, such third diaphragm has a smaller area than the first and second loudspeaker diaphragms. The third diaphragm may have a separate magnetic circuit, or it may have parts or its entire magnetic circuit common with the first and second loudspeaker diaphragms.

In the front covers 20, 30 shown in FIGS. 1 and 2, sound outlet openings are positioned so as to allow sound to be directed in a direction substantially perpendicular to the movement of the diaphragms. This provides the possibility of forming the front cover relatively flat in order to fit within slim mobile devices such as mobile phones and still be able to have sound outlet openings on the sides of such devices. Front covers may be formed by a synthetic material or by a sheet of metal pressed into shape by a punching or stamping process. The sound outlet openings may in principle have any shape, and they may be formed as one large single opening in each end, or in each end the sound outlet opening may be provided by a number of small openings.

The dual loudspeaker modules described so far may be electrically terminated by three terminals, i.e. with one common terminal common to both diaphragm and coil assemblies, or they may be electrically terminated by four terminals, i.e. completely separate terminals for the two coils.

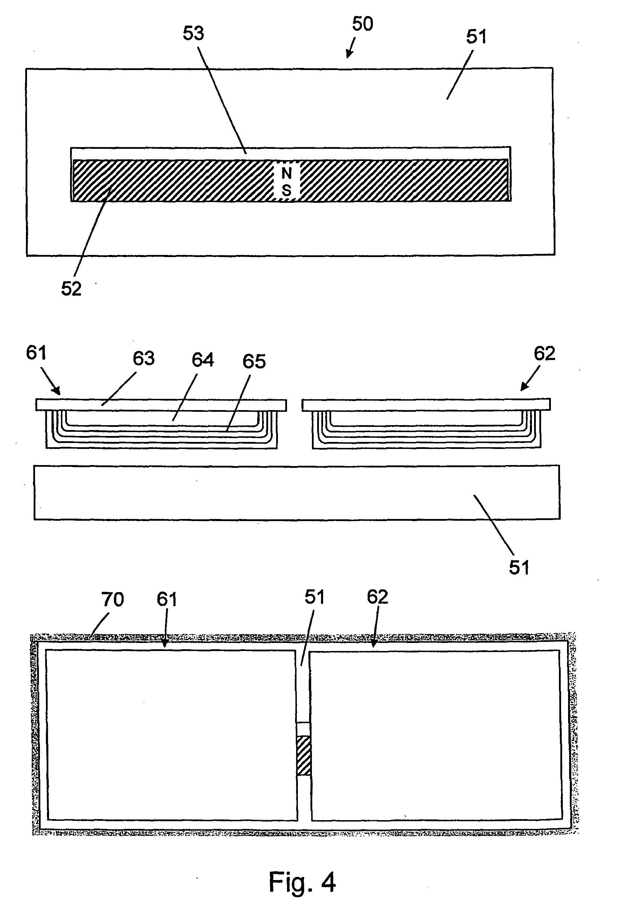

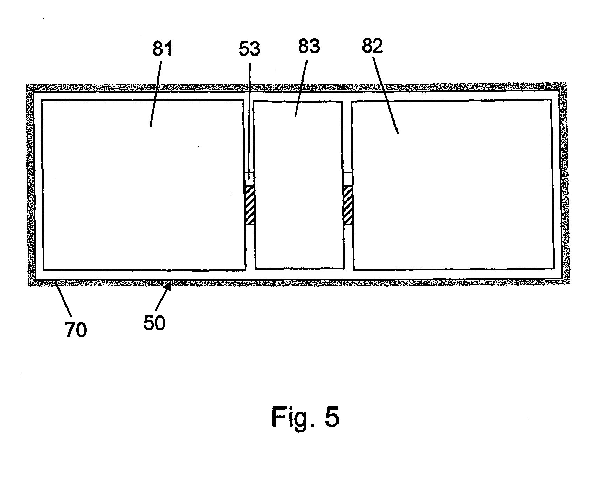

FIGS. 4 and 5 show sketches of embodiments with alternative magnetic circuits comprising one magnetic gap common to two and three diaphragm and coil assemblies. Sketches of FIGS. 4 and 5 merely serve to illustrate alternative preferred principles of magnetic circuits.

FIG. 4, upper part, shows a top view sketch of a magnetic circuit 50 suitable for preferred embodiments according to the invention. The magnetic circuit 50 comprises a body of magnetically conducting material 51 and a magnet 52 positioned within an opening of the body 51. The poles of the magnet 52 are indicated by "N" and "S," respectively. The body 51 and the magnet 52 forms together a magnetic gap 53. If preferred, this magnetic gap 53 may be formed by a through-going opening.

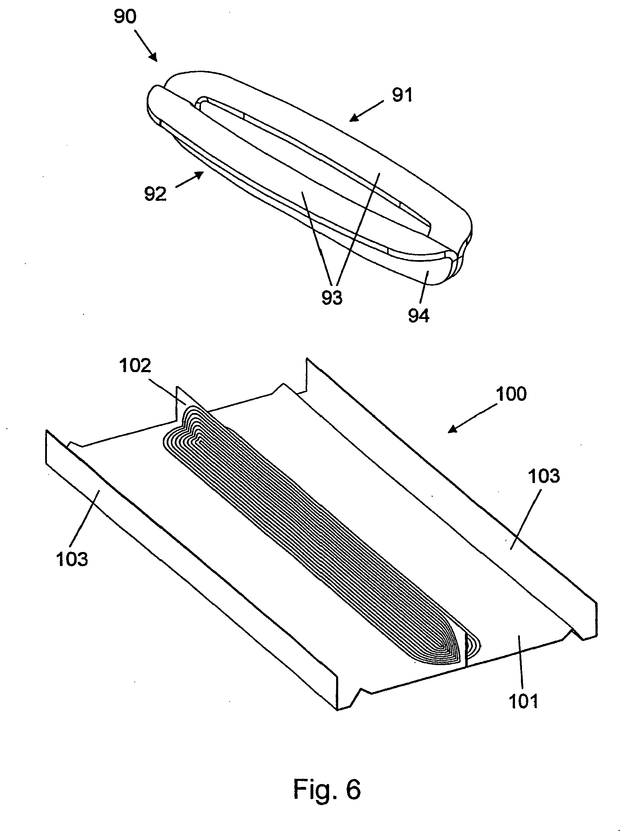

FIG. 4, middle part, shows an exploded side view sketch of the magnetic circuit 50 where the body 51 is visible. In addition, first and second diaphragm and coil assemblies 61, 62 are shown. Since the two assemblies 61, 62 are preferably similar, they will be described only with reference to the first one 61. The first diaphragm and coil assembly 61 comprises a substantially plane diaphragm 63 and a coil portion 64 perpendicular to the diaphragm 63 and attached thereto. The coil portion 64 has electrically conductive paths 65 disposed on its surface thus forming gap portions of a coil adapted to be positioned in the magnetic gap 53. The magnetic gap 53 thus serves as a common magnetic gap 53 for both of the first and second diaphragm and coil assemblies 61, 62. The conductive paths 65 on the coil portion 64 forming the gap portion of the coil comprise a plurality of substantially straight paths adapted to conduct current in one direction. Conducting paths in a plane perpendicular to the coil portion 64, e.g. disposed on the diaphragm 63, form a remaining part of the coil. A more de-tailed description of a diaphragm and coil assembly suited for the magnetic circuit 50 will be described in connection with FIG. 6.

FIG. 4, lower part, shows a top view sketch of the magnetic circuit 50 with first and second diaphragm and coil assemblies 61, 62 in an operational position. The magnetic circuit 50 is mounted in a housing 70. It is appreciated that the embodiment of FIG. 4 may be mounted with a front cover such as the ones shown in FIG. 2.

An alternative magnetic circuit comprises two parallel magnetic gaps that are common for two diaphragm and coil assemblies. In other words, such magnetic circuit may be formed as an elongated version of the type of magnetic circuit 1 shown in FIG. 1, thus allowing first and second diaphragm and coil assemblies each having first and second gap portions positioned in respective ones of the first and second magnetic gaps.

FIG. 5 shows a top view sketch of an embodiment with first, second and third diaphragm and coil assemblies 81, 82, 83 positioned on a line on a magnetic circuit 50 as the one shown in FIG. 4. The magnetic gap 53 of the magnetic circuit 50 serves as one common gap for all three diaphragm and coil assemblies 81, 82, 83. First and second diaphragm and coil assemblies 81, 82 may serve to provide stereo sound while the third diaphragm and coil assembly 83, positioned between the first and second diaphragm and coil assemblies 81, 82, may serve as a separate transducer such as to provide receiver sound in a telephone handset, such as described above. As also shown in FIG. 4, the magnetic circuit 50 is mounted in a housing 70, and it is appreciated that the embodiment of FIG. 5 may be mounted with a front cover such as the one shown in FIG. 3 having a separate receiver sound outlet opening 43.

FIG. 6 shows 3-D views of two different coil embodiments suited for operation together with the one gap magnetic circuits of FIGS. 4 and 5.

FIG. 6, upper part, shows a preferred coil system 90 comprising two flat coils 91, 92 of wounded wire. The two flat coils 91, 92 are perpendicularly bent and positioned together to provide a T-shaped cross section. The T-shape provides one gap portion 94 adapted to fit in the magnetic gap 53 while another portion 93 serves for attachment to a diaphragm.
FIG. 6, lower part, shows a preferred integrated diaphragm and coil assembly 100 that may be formed by one single piece of flexible circuit board, e.g. a flex print folded into shape. The assembly 100 comprises a flat diaphragm part 101 and a gap part 102 being perpendicular to the diaphragm part 101. Wire patterns disposed on surfaces of the diaphragm part 101 and the gap part 102 are used to form one coil, or two coils, as shown in FIG. 6, namely on both sides of the gap part 102. Edge parts 103 of the assembly 100 serve for attachment to a fixed part of the multi-loudspeaker module.

It is appreciated that embodiments according to the invention may be formed by any combination of the described magnetic circuit principles. These magnetic circuit principles may either be applied to provide separate magnetic gaps for each diaphragm and coil assembly, such as shown in FIG. 1, or they may provide one or more magnetic gaps that are common for the two or more diaphragm and coil assemblies, such as shown in FIGS. 4 and 5.

It is also appreciated that the insert molding technique of attaching parts of the magnetic circuit, such as shown in FIG. 1, may be applied independently of the afore-mentioned magnetic circuit principles.

In a preferred embodiment, a dual loudspeaker module, such as the one already described, is adapted for receiving a digital input signal with multiplexed first and second audio signals. The input signal is received by an analog-to-digital converter adapted to receive a multiplexed input signal and generate output signals to two class D amplifiers that are connected to the first and second diaphragm and coil assemblies. The analog-to-digital converter and amplifier may be entirely or partly integrated into one or two integrated circuits that are mounted on the surface of one or both of the diaphragms and electrically connected to conductive portions disposed on the diaphragms, these conductive portions being connected to driving coils and electrical terminations.

Such dual loudspeaker module with a digital input may in addition comprise a third diaphragm and coil assembly in acoustical connection with a receiver sound outlet opening. The loudspeaker module may then be adapted to receive, in the digital input signal, information indicating a switch from stereo loudspeaker mode to a receiver mode of operation. In response to such information regarding a receiver mode, the loudspeaker module then selects the third diaphragm and coil assembly and thereby provides a receiver output.

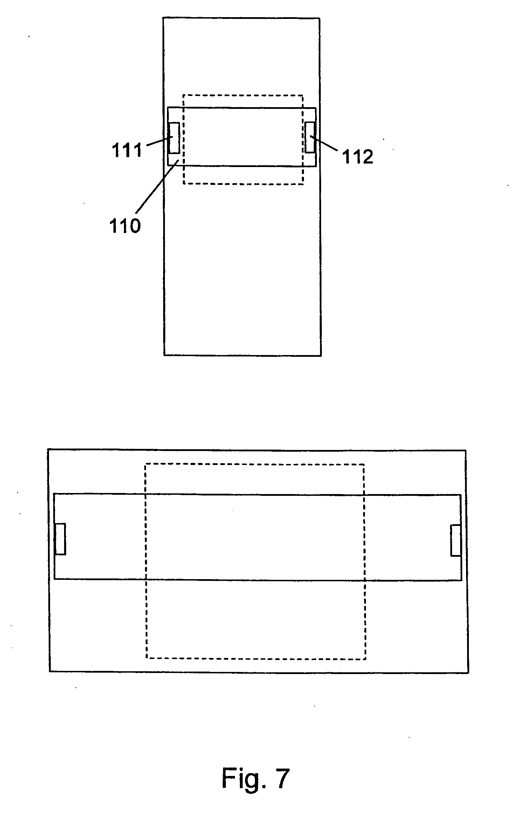

FIG. 7, upper part, shows a frontal sketch of a mobile phone comprising a stereo version of the multi-loudspeaker module 110 with a preferred position within the mobile phone. The display of the mobile phone is indicated with dashed line, and the sketch indicates positions of a first sound outlet 111 and a second sound outlet 112 of the loudspeaker module 110 on first and second sides of the mobile phone.

FIG. 7, lower part shows a corresponding frontal sketch of a mobile/handheld game device comprising a stereo version of the multi-loudspeaker module with a preferred position within the mobile/handheld game device. As in upper part of FIG. 7 a display of the game device is indicated with dashed line, and positions of first and second sound outlet openings of the loudspeaker module are indicated.

While particular embodiments and applications of the present invention have been illustrated and described, it is to be understood that the invention is not limited to the precise construction and compositions disclosed herein and that various modifications, changes, and variations can be apparent from the foregoing descriptions without departing from the spirit and scope of the invention as defined in the appended claims.

## Claims

1. Miniature multi-loudspeaker module comprising
- a housing, comprising
- a magnetic circuit comprising magnetic means and a magnetically conducting body arranged to generate a magnetic field in one or more magnetic gaps, and
- a first diaphragm and coil assembly and a second diaphragm and coil assembly that are separately movable, wherein the first and second coils each comprises one or more gap portions positioned in the magnetic field, the first and second diaphragms extending in substantially the same plane,
- first and second sound outlet openings being arranged so as to transmit sound from the module in directions being substantially parallel to a plane defined by the diaphragms, the first and second sound outlet openings each being in acoustical connection with respective ones of the first and second diaphragms.

2. Miniature multi-loudspeaker module according to claim 1, wherein the first and second sound outlet openings are arranged in a front cover fixedly arranged relative to the housing.

3. Miniature multi-loudspeaker module according to claim 2, wherein the first and second sound outlet openings are positioned in respective end parts of the front cover.

4. Miniature multi-loudspeaker module according to claim 2 or 3, wherein the front cover is formed in one single piece.

5. Miniature multi-loudspeaker module according to any of the preceding claims, wherein the magnetic circuit further comprises a common magnetic gap shared by gap portions of the first and second coils.

6. Miniature multi-loudspeaker module according to any of claims 1-4, wherein the magnetic circuit further comprises a first and a second magnetic gap for respective gap portions of the first and second coils.

7. Miniature multi-loudspeaker module according to claim 6, wherein the first and second magnetic gaps comprise respective first and second substantially circular gaps with respective substantially circular gap portions of the first and second coils positioned therein.

8. Miniature multi-loudspeaker module according to claim 6, wherein the magnetic circuit further comprises first and second magnetic gaps for respective first and second gap portions of the first coil and third and fourth magnetic gaps for respective first and second gap portions of the second coil.

9. Miniature multi-loudspeaker module according to claim 6, wherein the magnetic circuit further comprises first and second magnetic means adapted to generate magnetic fields in the respective first and second magnetic gaps.

10. Miniature multi-loudspeaker module according to any of the preceding claims, wherein the magnetic circuit further comprises a plurality of separate parts that are fixed together by means of insert molding.

11. Miniature multi-loudspeaker module according to claim 9, wherein the magnetic circuit further comprises first and second separate magnetic circuits that comprise respective first and second magnetic gaps, wherein the first and second separate magnetic circuits are separated by a molded synthetic material part.

12. Miniature multi-loudspeaker module according to claim 11, wherein the molded synthetic material part forms, together with the housing and a, an acoustical shielding member between the first and second diaphragms.

13. Miniature multi-loudspeaker module according to any of the preceding claims, further comprising a receiver sound outlet opening.

14. Miniature multi-loudspeaker module according to claim 13, wherein the receiver sound outlet opening is acoustically connected to at least one of the first and second diaphragms via an acoustically resistive element.

15. Miniature multi-loudspeaker module according to any of the preceding claims, further comprising first and second electrical terminals connected to respective first ends of the first and second coils.

16. Miniature multi-loudspeaker module according to claim 15, further comprising a third electrical terminal connected to second ends of the first and second coils.

17. Miniature multi-loudspeaker module according to any of the preceding claims, wherein the first and second diaphragms are formed by one single piece of a substantially plane sheet shaped so as to provide first and second separately movable regions.

18. Miniature multi-loudspeaker module according to any of the preceding claims, wherein the first and second diaphragms are formed by separate substantially plane sheets.

19. Miniature multi-loudspeaker module according to claim 12, further comprising a third diaphragm and coil assembly, wherein the third coil comprises a gap portion positioned in the magnetic field, wherein the third diaphragm and coil assembly is separately movable from the first and second diaphragm and coil assemblies, and wherein the third diaphragm is acoustically connected to the receiver sound outlet opening.

20. Miniature multi-loudspeaker module according to claim 19, wherein the first, second and third diaphragms are formed by one single piece of a substantially plane sheet shaped so as to provide three separately movable regions.

21. Miniature multi-loudspeaker module according to any of the preceding claims, further comprising:
- an electrical input terminal adapted to receive a digital electrical signal representing first and second audio signals; and
- means adapted to transform the received digital electrical signal to corresponding first and second analog electrical signals and apply these analog electrical signals to respective ones of the first and second coils.

22. Mobile terminal comprising a miniature multi-loudspeaker module according to any of the preceding claims.

23. Mobile terminal according to claim 22, wherein the mobile terminal is selected from the group consisting of: mobile phone, palm computer, MP3 player, mobile game device and mobile radio.
